# EUROPÄISCHE PATENTSCHRIFT

(11) **EP 4 094 056 B1**
(45) Veröffentlichungstag und Bekanntmachung des Hinweises auf die Patenterteilung: **19.06.2024**
(21) Anmeldenummer: 20820879.3
(22) Anmeldetag: 07.12.2020
(51) Int. Cl.: G01F 23/296, G01N 29/024, G01F 23/2962

(54) **SENSORVORRICHTUNG ZUM ERFASSEN EINES FÜLLSTANDS UND/ODER EINER QUALITÄT EINES FLUIDS, UND VERFAHREN ZUM HERSTELLEN DERSELBEN**
FLUID SENSOR ASSEMBLY FOR DETERMINING A FLUID LEVEL AND/OR A FLUID QUALITY, AND SENSOR ASSEMBLY MANUFACTURING METHOD
ASSEMBLAGE DE CAPTEUR POUR DÉTERMINER UN NIVEAU ET/OU UNE QUALITÉ D'UN FLUIDE, ET SON PROCÉDÉ DE FABRICATION

(30) Priorität: 23.01.2020 DE 102020200771
(43) Veröffentlichungstag der Anmeldung: 30.11.2022
(73) Patentinhaber: Vitesco Technologies Germany GmbH, 93055 Regensburg (DE)
(72) Erfinder: PFEIFFER, Karl-Friedrich, 81737 München (DE); GROTEVENT, Henning, 81737 München (DE); ROTH, Manfred, 81737 München (DE)
(74) Vertreter: Vitesco Technologies
(86) Internationale Anmeldenummer: PCT/EP2020/084845
(87) Internationale Veröffentlichungsnummer: WO 2021/148181

(56) Entgegenhaltungen:
- DE-A1-102005 012 566
- JP-A- 2010 164 331
- US-A1- 2002 012 015
- US-A1- 2010 095 750
- US-A1- 2017 157 647
- US-A1- 2019 291 136

## Beschreibung

Die vorliegende Erfindung betrifft eine Fluidsensorvorrichtung zum Erfassen des Füllstands und/oder Qualität eines Fluids, vorzugsweise Öl, wässrige Harnstofflösung oder Wasser, und ein Verfahren zum Herstellen derselben.

Zum Bestimmen einer Höhe einer Fluidoberfläche in einem Fluidbehälter kann beispielsweise eine akustische Messvorrichtung eingesetzt werden. Ein Schallwandler der akustischen Messvorrichtung kann sowohl als Schallerzeuger als auch als Schallempfänger arbeiten. Für eine Bestimmung der Höhe der Fluidoberfläche in dem Fluidbehälter können mittels des Schallwandlers Schallimpulse bzw. Schallsignale in das zu vermessende Fluid abgegeben werden. Die Schallimpulse bzw. Schallsignale können von einer Oberfläche bzw. Grenzfläche des Fluids zu einem weiteren Medium reflektiert werden. Aus der Laufzeit der Schallimpulse bzw. Schallsignale können Rückschlüsse auf die Höhe der Fluidoberfläche in dem Fluidbehälter gezogen werden und somit der Füllstand des Fluids ermittelt werden. Bevorzugt liegen die Frequenzen der Schallsignale im Bereich des Ultraschalls.

Im Stand der Technik ist es bekannt, Fluidsensorvorrichtungen als kompakte elektronische Baueinheiten zu fertigen. Hierzu kann beispielsweise eine Leiterplatte mit sämtlichen elektronischen Komponenten, insbesondere auch zumindest einem Ultraschallwandler, bestückt werden, welche dann wiederum komplett mit einem Kunststoff umspritzt wird, um ein Gehäuse für die Elektronik zu bilden und die elektronischen Komponenten vor Umwelteinflüssen, wie beispielsweise Feuchtigkeit, zu schützen. Dabei ist es bekannt, den Ultraschallwandler vollflächig auf der Oberfläche der Leiterplatte anzulöten und dadurch mit den Leiterbahnen auf der Leiterplatte elektrisch zu verbinden.

Die DE 10 2016 205 240 B3 offenbart ein Verfahren zum Herstellen eines Ultraschallsensors und einen Ultraschallsensor, der dazu ausgebildet ist, den Füllstand und/oder die Temperatur eines Fluids in einer Brennkraftmaschine zu erfassen. Das darin offenbarte Verfahren weist ein Bereitstellen einer Elektronik des Ultraschallsensors, ein Anordnen der Elektronik des Ultraschallsensors in einem Spritzgusswerkzeug und ein Umspritzen der Elektronik mit Kunststoff zum Formen eines Gehäuses für die Elektronik auf. Das Gehäuse umfasst zumindest einen Funktionsabschnitt, der dazu ausgebildet ist, eine vorbestimmte Funktion zu erfüllen.

Weitere Ultraschallsensorvorrichtungen sind aus CN 105 596 027 A, US 7 471 034 B2, CN 209 296 914 U und US 10 433 063 B2 bekannt. Zudem sind die US 2002/012015 A1, US 2010/095750 A1, US 2019/291136 A1, JP 2010 164331 A, DE 10 2005 012566 A1 und US 2017/157647 bekannt.

Das vollflächige Verlöten des Ultraschallsensors aus der Leiterplatte kann dazu führen, dass sich Lufteinschlüsse oder Fehlstellen in der Lötschicht zwischen dem Ultraschallwandler und der Leiterplatte bilden, selbst wenn der Lötvorgang als Vakuum-Lötvorgang durchgeführt. Diese Lufteinschlüsse oder Fehlstellen sind für die akustischen Eigenschaften des Schallwandlers sehr störend, da sie zufällige Störungen im Schwing-, Abstrahl- und Ausklingverhaltens des Schallwandlers darstellen können. Zudem kann der Schallwandler während des Lötvorgangs dazu neigen, auf dem Lötmaterial aufzuschwimmen und sich undefiniert seitlich zu bewegen, was die Genauigkeit der Positionierung des Schallwandlers auf der Leiterplatte und somit die Messgenauigkeit der gesamten Fluidsensorvorrichtung einschränken kann. Werden statt eines flächigen Lötmaterialauftrags ein Raster von kleineren Einzelpunkten gewählt, kann dieser Effekt tendenziell noch verstärkt auftreten. Ein weiterer negativer Effekt dabei ist, dass Dickenschwankungen der Leiterplatten zu einem unterschiedlichen akustischen Verhalten des Schallwandlers führen können. Wird der Schallwandler statt mit Lot mit einem (bevorzugt leitfähigen) Klebstoff auf der Leiterplatte befestigt, treten analoge Probleme mit Fehlstellen oder Lufteinschlüssen auf.

Der vorliegenden Erfindung liegt somit die Aufgabe zugrunde, eine Fluidsensorvorrichtung und ein Verfahren zum Herstellen derselben bereitzustellen, mit der eine exakte Positionierung des Schallwandlers auf der Leiterplatte möglich ist und die Messgenauigkeit der Fluidsensorvorrichtung im Wesentlichen verbessert ist.

Diese Aufgabe wird mit einer Fluidsensorvorrichtung gemäß unabhängigen Anspruch 1 und einem Verfahren zum Herstellen einer Fluidsensorvorrichtung gemäß unabhängigem Anspruch 10 gelöst. Bevorzugte Ausgestaltungen sind in den Unteransprüchen angegeben.

Der vorliegenden Erfindung liegt im Wesentlichen der Gedanke zugrunde, die Leiterplatte der Fluidsensorvorrichtung im Bereich des Ultraschallwandlers zu strukturieren bzw. vollständig zu durchbrechen, so dass der Ultraschallwandler beim Einbettungsprozess, beispielsweise mittels Kunststoffpressen oder Kunststoffspritzgießen, nahezu vollständig umschlossen wird und die akustischen Eigenschaften nicht von einer Lot- oder Klebeschicht zwischen Schwallwandler und Leiterplatte beeinträchtigt werden. Zudem kann die Messgenauigkeit durch das Vorsehen von nur wenigen Lötpunkten verbessert werden, da ein Aufschwimmen des Ultraschallwandlers auf der Lotschicht zumindest teilweise reduziert werden kann und die Oberflächenspannung des Lots den Ultraschallwandler an der gewünschten Position halten kann. Analoge Vorteile sind bei einer (bevorzugt leitfähigen) Verklebung des Ultraschallwandlers auf wenigen Befestigungspunkten gegeben.

Gemäß einem ersten Aspekt der vorliegenden Erfindung ist eine Fluidsensorvorrichtung zum Erfassen eines Füllstands und/oder einer Qualität eines in einem Fluidbehälter befindlichen Fluids offenbart. Die erfindungsgemäße Fluidsensorvorrichtung weist eine Leiterplatte auf, die zumindest eine Ausnehmung aufweist, die sich in Dickenrichtung der Leiterplatte vollständig durch diese hindurcherstreckt. Die Leiterplatte umfasst zumindest einen Befestigungsbereich, der vorzugsweise in unmittelbarer Nähe zur bzw. angrenzend an die Ausnehmung angeordnet ist. Die erfindungsgemäße Fluidsensorvorrichtung weist ferner einen Ultraschallwandler, der an dem zumindest einen Befestigungsbereich der Leiterplatte derart angebracht ist, dass sich der Ultraschallwandler zumindest teilweise über die Ausnehmung erstreckt, und ein Gehäuse auf, das zumindest teilweise die Leiterplatte und den Ultraschallwandler derart umgibt, dass ein Gehäusebereich zumindest teilweise in der Ausnehmung angeordnet ist. Der in der Ausnehmung angeordnete Gehäusebereich weist auf der dem Ultraschallwandler abgewandten Seite einen konkaven Abschnitt auf, der dazu ausgebildet, die vom Ultraschallwandler ausgesendeten Ultraschallsignale zumindest teilweise vom Ultraschallwandler weg abzulenken oder definiert zum Ultraschallwandler zurück zu reflektieren oder in die Umgebung zu transmittieren.

Dadurch, dass der Ultraschallwandler lediglich über den (relativ kleinen) Befestigungsbereich mit der Leiterplatte verbunden ist und ein Gehäusebereich zumindest teilweise in der Ausnehmung angeordnet ist, können die bereits oben als Nachteile festgestellten Aspekte zumindest teilweise überwunden werden. Insbesondere können die bei einem Löt- oder Klebevorgang erzeugten Lufteinschlüsse bzw. Fehlstellen durch das vollständige Anschmiegen des Gehäuses am Ultraschallsensor nahezu vermieden werden. Zudem kann eine bessere Dämpfung der Abklingzeit des Ultraschallwandlers erzielt und eine geringere Streuung der Eigenschaften von verschiedenen Fluidsensorvorrichtungen erzielt werden. Außerdem kann eine bessere Positionierung des Ultraschallwandlers während des Löt- oder Klebevorgangs erfolgen, da der Ultraschallwandler lediglich über den zumindest flächenmäßig kleinen Befestigungsbereich an der Leiterplatte befestigt ist und nicht mehr, wie es aus dem Stand der Technik bekannt war, vollflächig auf der Leiterplatte.

Bei einer vollständig durchbrochenen Leiterplatte kann somit die Rückseite des Gehäuses bzw. des sich in der Ausnehmung befindlichen Gehäusebereichs des Gehäuses derart strukturiert werden, dass die akustischen Eigenschaften des Ultraschallwandlers gezielt verbessert werden. Beispielsweise kann ein konischer konkaver Bereich an dieser Stelle eingebracht werden, der sich auch zumindest teilweise in die Ausnehmung erstreckt und dazu ausgebildet ist, die vom Ultraschallwandler ausgesandten Ultraschallsignale derart abzulenken, dass diese nicht mehr zurück zum Ultraschallwandler als Störsignale reflektiert werden.

In vorteilhafter Weise ist die Ausnehmung aus zumindest einer Bohrung gebildet. Dabei kann es bevorzugt sein, die Ausnehmung aus vier Bohrungen mit parallelen Bohrungsachsen zu bilden, wobei die Bohrungsachsen von drei der Bohrungen relativ zur Bohrungsachse der anderen Bohrungen derart symmetrisch angeordnet sind, dass diese an den Ecken eines Dreiecks, vorzugsweise gleichseitigen Dreiecks, liegen, das in einer Ebene senkrecht zu den Bohrungsachsen liegt, und sich die Bohrungen zumindest teilweise überlappen und somit eine ununterbrochene Ausnehmung formen.

Durch eine solche symmetrisch geformte Ausnehmung können drei verteilte Befestigungsbereiche erhalten werden, die relativ zur mittleren Bohrung symmetrisch verteilt angeordnet sind. Diese Symmetrie kann zu dem positiven Effekt führen, dass beim Anlöten des Ultraschallwandlers an der Leiterplatte die Oberflächenspannung des Lötmaterials zu einer guten Positionierung des Ultraschallwandlers führen kann. Außerdem ist es erwünscht, einen ausreichend großen Bereich unterhalb des Ultraschallwandlers freihalten, damit ausreichend Gehäusematerial unterhalb des Ultraschallwandlers und innerhalb der Ausnehmung angeordnet werden kann.

In einer weiteren bevorzugten Ausgestaltung der erfindungsgemäßen Fluidsensorvorrichtung haben die vier Bohrungen jeweils einen gleichen Bohrungsdurchmesser und der Abstand der Bohrungsachsen der drei äußeren Bohrungen zur Bohrungsachse der mittleren Bohrung entspricht ungefähr dem 0,2-fachen bis 0,9-fachen des Bohrungsdurchmessers. Damit kann sichergestellt werden, dass die symmetrische Anordnung der Bohrungsachsen zueinander zu einem ausreichend großen Überlapp führen und eine ununterbrochene Ausnehmung erhalten werden kann. Alternativ weisen die Bohrungen unterschiedliche Bohrungsdurchmesser auf. Den bevorzugten Ausgestaltungen gemeinsam ist somit ein zumindest teilweiser Überlapp zwischen den Bohrungen und die daraus resultierende zusammenhängende und ununterbrochene Ausnehmung.

Gemäß einer weiteren bevorzugten Ausgestaltung der Fluidsensorvorrichtung ist die Ausnehmung aus fünf Bohrungen mit im Wesentlichen parallelen Bohrungsachsen gebildet, wobei die Bohrungsachsen von vier der Bohrungen relativ zur Bohrungsachse der anderen Bohrung derart angeordnet sind, dass diese an den Ecken eines Vierecks, vorzugsweise eines Rechtecks, noch bevorzugter eines Quadrats liegen, das in einer Ebene senkrecht zu den Bohrungsachsen liegt, und sich die Bohrungen zumindest teilweise überlappen.

Dabei ist es bevorzugt, dass die fünf Bohrungen jeweils den gleichen Bohrungsdurchmesser haben und der Abstand der Bohrungsachsen der vier äußeren Bohrungen zur Bohrungsachse der mittleren Bohrung ungefähr dem 0,2-fachen bis 0,9-fachen des Bohrungsdurchmessers entspricht. Alternativ weisen die Bohrungen unterschiedliche Bohrungsdurchmesser auf.

Gemäß einer vorteilhaften Ausgestaltung der erfindungsgemäßen Fluidsensorvorrichtung ist die Ausnehmung zumindest teilweise durch Fräsungen gebildet. Dabei kann es bevorzugt sein, dass die Ausnehmung durch drei geradlinige Fräsungen gebildet ist, die sich von einem gemeinsamen Punkt aus unter einem Winkel von ungefähr 120° symmetrisch zueinander erstrecken.

Alternativ ist die Ausnehmung eine kreuzförmige Ausnehmung. Das heißt, dass die Ausnehmung aus zwei geradlinigen Fräsungen besteht, die sich bevorzugt im Mittelpunkt schneiden. Bevorzugt stehen die beiden geradlinigen Fräsungen im Wesentlichen senkrecht zueinander und bilden ein symmetrisches Kreuz.

Gemäß einem weiteren Aspekt der vorliegenden Erfindung ist ein Verfahren zum Herstellen einer Fluidsensorvorrichtung offenbart, die zum Erfassen eines Füllstands und/oder Qualität eines in einem Fluidbehälter befindlichen Fluids ausgebildet ist. Das erfindungsgemäße Verfahren umfasst ein Bereitstellen einer Leiterplatte, die eine Ausnehmung aufweist, die sich in Dickenrichtung der Leiterplatte vollständig durch diese hindurch erstreckt, ein Anbringen von zumindest einem Ultraschallwandler an der Leiterplatte derart, dass sich der Ultraschallwandler zumindest teilweise über die Ausnehmung erstreckt, und ein Umspritzen von zumindest teilweise der Leiterplatte und des Ultraschallwandlers mit Kunststoff zum Formen eines Gehäuses derart, dass ein Gehäusebereich zumindest teilweise in der Ausnehmung angeordnet ist. Der in der Ausnehmung angeordnete Gehäusebereich weist auf der dem Ultraschallwandler abgewandten Seite einen konkaven Abschnitt auf, der dazu ausgebildet, die vom Ultraschallwandler ausgesendeten Ultraschallsignale zumindest teilweise vom Ultraschallwandler weg abzulenken oder definiert zum Ultraschallwandler zurück zu reflektieren oder in die Umgebung zu transmittieren..

In einer weiteren bevorzugten Ausgestaltung des erfindungsgemäßen Verfahrens ist die Ausnehmung aus zumindest einer Bohrung und/oder zumindest einer Fräsung gebildet.

Vorzugsweise umfasst das Anbringen des zumindest einen Ultraschallwandlers an der Leiterplatte ein Positionieren des Ultraschallwandlers an der Leiterplatte an einer vorbestimmten Position, ein Fixieren des Ultraschallwandlers an der vorbestimmten Position mittels einer Positionierungseinrichtung und ein Befestigen und elektrisches Verbinden des Ultraschallwandlers mit der Leiterplatte. Bei der Positionierungseinrichtung kann es sich um eine Schablone oder eine Klemme handeln.

Weitere Aufgaben und Merkmale der vorliegenden Erfindung werden dem Fachmann durch Ausüben der vorliegenden Lehre und Betrachten der beiliegenden Zeichnungen ersichtlich, in denen:
- Fig. 1: eine schematische Ansicht einer Fluidsensorvorrichtung zum Bestimmen des Füllstands und/oder der Qualität eines Fluids in einem Fluidbehälter zeigt,
- Fig. 2: eine schematische Draufsicht auf eine erste Ausführungsform einer Leiterplatte der in Fig. 1 dargestellten Fluidsensorvorrichtung zeigt,
- Fig. 3: eine schematische Draufsicht auf eine weitere Ausführungsform der Leiterplatte der in Fig. 1 dargestellten Fluidsensorvorrichtung zeigt,
- Fig. 4: eine schematische Draufsicht auf eine weitere Ausführungsform der Leiterplatte der in Fig. 1 dargestellten Fluidsensorvorrichtung zeigt,
- Fig. 5: eine schematische Draufsicht auf eine weitere Ausführungsform der Leiterplatte der in Fig. 1 dargestellten Fluidsensorvorrichtung zeigt,
- Fig. 6: eine Schnittansicht durch die Leiterplatte einer erfindungsgemäßen Fluidsensorvorrichtung entlang der Linie A - A der Fig. 3 mit einer ersten Ausgestaltungsmöglichkeit für ein Gehäuse der Fluidsensorvorrichtung zeigt,
- Fig. 7: eine Schnittansicht durch die Leiterplatte einer erfindungsgemäßen Fluidsensorvorrichtung entlang der Linie A - A der Fig. 3 mit einer weiteren Ausgestaltungsmöglichkeit für ein Gehäuse der Fluidsensorvorrichtung zeigt,
- Fig. 8: eine Schnittansicht durch die Leiterplatte einer erfindungsgemäßen Fluidsensorvorrichtung entlang der Linie A - A der Fig. 3 mit einer weiteren Ausgestaltungsmöglichkeit für ein Gehäuse der Fluidsensorvorrichtung zeigt,
- Fig. 9: ein beispielhaftes Ablaufdiagramm eines erfindungsgemäßen Verfahrens zum Herstellen einer erfindungsgemäßen Fluidsensorvorrichtung zeigt.

Elemente gleicher Konstruktion oder Funktion sind figuren-übergreifend mit den gleichen Bezugszeichen versehen.

Im Rahmen der vorliegenden Offenbarung beschreibt der Begriff "Fluidqualität" einen ein Fluid charakterisierenden Parameter. Beispielsweise können die Schallgeschwindigkeit des Fluids, die Dichte des Fluids, von der die chemische Zusammensetzung des Fluids abgeleitet werden kann, die elektrischen Eigenschaften des Fluids und die Dämpfungseigenschaften des Fluids als Parameter aufgefasst werden, die die Fluidqualität charakterisieren. Beispielsweise kann bei einer wässrigen Harnstofflösung, wie z. B. Urea, der Harnstoffanteil im Wasser über die Ermittlung der temperaturabhängigen Schallgeschwindigkeit der wässrigen Harnstofflösung abgeschätzt werden.

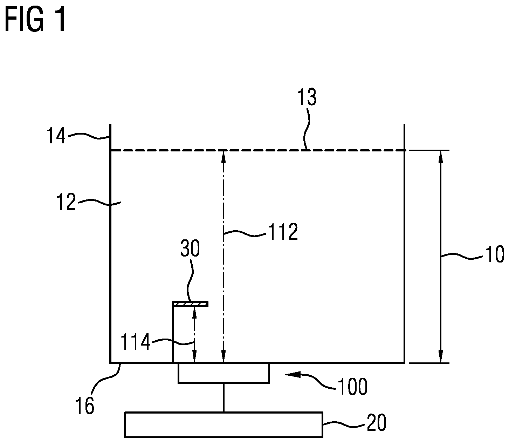

Zum Bestimmen eines Füllstands 10 eines Fluids 12 in einem Fluidbehälter 14 ist eine Fluidsensorvorrichtung 100 vorgesehen, die am Bodenabschnitt 16 des Fluidbehälters 14 angeordnet ist. Insbesondere kann, wie in der Fig. 1 dargestellt, die Fluidsensorvorrichtung 100 derart von außen am Fluidbehälter 14 angebracht sein, dass die von der Fluidsensorvorrichtung 100 ausgesendeten Ultraschallsignale durch die Wandung des Bodenabschnitts 16 hindurch in das Fluid 12 eingekoppelt werden. Alternativ ist es auch möglich, im Bodenabschnitt 16 des Fluidbehälters 14 eine Öffnung (in der Fig. 1 nicht gezeigt) vorzusehen, die von der von außen am Bodenabschnitt 16 angebrachten Fluidsensorvorrichtung 100 derart mediendicht verschlossen wird, dass die von der Fluidsensorvorrichtung 100 ausgesendete Ultraschallsignale direkt in das Fluid 12 eingekoppelt werden können.

Zum Beispiel ist die Gehäusewandung des Fluidbehälters 14 aus einem Kunststoff gebildet, wie beispielsweise aus sogenanntem hochdichtem Polyethylen (High Density Polyethylene, HDPE). Die Fluidsensorvorrichtung 100 kann mit der Gehäusewandung des Fluidbehälters 14 verklebt oder mechanisch an diese gepresst sein, eventuell auch mit einer weiteren Zwischenschicht, um Unebenheiten oder Rauigkeiten auszugleichen.

Es ist ferner eine Steuereinheit 20 vorgesehen, die mit der Fluidsensorvorrichtung 100 verbunden und dazu ausgebildet ist, die Fluidsensorvorrichtung 100 zum Aussenden von Schallsignalen anzusteuern und die von der Fluidsensorvorrichtung 100 empfangenen Signale zum Ermitteln des Füllstands und/oder der Qualität des Fluids 12 auszuwerten.

Der Füllstand 10 des Fluids 12 ist dabei definiert als der Abstand der Fluidoberfläche 13 vom Bodenabschnitt 3, gemessen in einer Neutralstellung des Fluidbehälters 14, also wenn keine Schrägstellung des Fluidbehälters 14 vorliegt und die Fluidoberfläche 13 im Wesentlichen parallel zum Bodenabschnitt 16 ist.

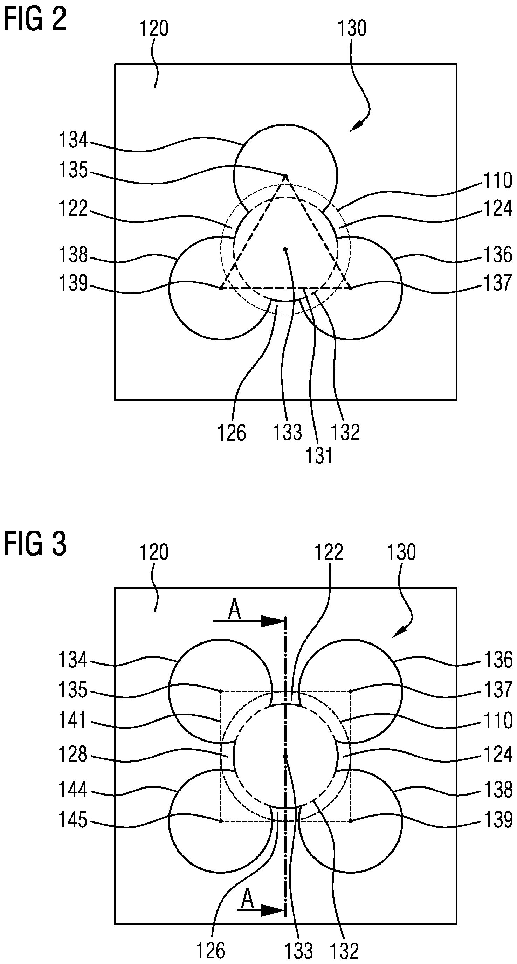

Unter zusätzlichen Verweis auf die Fig. 2 umfasst die Fluidsensorvorrichtung 100 zumindest einen Ultraschallwandler 110 (siehe beispielsweise Fig. 2), der auf einer Leiterplatte 120 angeordnet und dazu ausgebildet ist, Ultraschallsignale auszusenden und zu empfangen. Der Ultraschallwandler 110 kann durch unterschiedliche Ansteuerung dazu ausgebildet sein, ein Ultraschallsignal mit unterschiedlichen Schallfrequenzen in das Fluid 12 auszusenden und wieder als Reflexionssignal zu empfangen. Beispielsweise sind in der Fig. 1 die vom Ultraschallwandler 110 ausgesendeten und wieder empfangenen Schallsignale zum Erfassen des Füllstands 10 mit dem Pfeil 112 gekennzeichnet.

In dem Fluid 12 ist weiterhin zumindest ein Referenzelement 30 (siehe Fig. 1) vorgesehen, das vorzugsweise aus einem Material gebildet ist, das ein Metall aufweist. Das Referenzelement 30, das selbstredend optional ist, ist unter einem vorbestimmten, konstanten Abstand zu einem auf der Leiterplatte 120 angeordneten weiteren Ultraschallwandler (nicht explizit gezeigt) angeordnet und dazu ausgebildet, zumindest einen Teil des mit einem Pfeil 114 dargestellten Ultraschallsignals zu reflektieren. Wie in der Fig. 1 gezeigt kann es bevorzugt sein, dass das Referenzelement 30 innerhalb des Fluidbehälters 14 mit dem Bodenabschnitt 16 mechanisch gekoppelt ist. An dieser Stelle ist festzuhalten, dass nur der Ultraschallwandler 110 vorhanden sein kann, der Ultraschallsignale sowohl an die Oberfläche 13 als auch an das Referenzelement 30 aussendet.

Das Bestimmen des Füllstands 10 und/oder der Qualität des Fluids 12 erfolgt, wie im Stand der Technik ausführlich beschrieben, mittels Auswertung des vom Ultraschallwandler 110 zu der Fluidoberfläche 13 ausgesendeten, an der Fluidoberfläche 13 reflektierten und wieder empfangenen Ultraschallsignals 112 und mittels Auswertung des von einem anderen Ultraschallwandler zum Referenzelement 30 ausgesendeten, am Referenzelement 30 reflektierten und wieder empfangenen Ultraschallsignals 114, auf dessen Grundlage die Qualität des Fluids 12, wie beispielsweise die Schallgeschwindigkeit im Fluid 12, bestimmt werden kann. Alternativ kann, wie bereits erwähnt, der Füllstand und die Qualität auf der Grundlage, der von einem einzigen vorgesehenen Ultraschallwandler 110 ausgesendeten Ultraschallsignalen ermittelt werden, der diese sowohl an die Oberfläche 13 als auch an das Referenzelement 30 aussendet.

Wie bereits erwähnt, weist die Fluidsensorvorrichtung 100 die Leiterplatte 120, den zumindest einen darauf angeordneten Ultraschallwandler 110 und einen optionalen weiteren Ultraschallwandler auf. Jedoch ist es selbstredend, dass auf der Leiterplatte 120 weitere elektronische Elemente, wie beispielsweise Kondensatoren, Widerstände, Operationsverstärker oder auch eine anwendungsspezifische, integrierte Schaltung (ASIC, application-specific integrated circuit), vorhanden sein können, die für einen ordnungsgemäßen Betrieb der Fluidsensorvorrichtung 100 notwendig sind.

Die Fig. 2 zeigt eine schematische Draufsicht auf die Leiterplatte 120 der Fluidsensorvorrichtung 100. Die Leiterplatte 120 weist eine Ausnehmung 130 auf, die in der Ausführungsform der Fig. 2 aus insgesamt vier Bohrungen 132, 134, 136, 138 gebildet ist. Die Bohrungen 132, 134, 136, 138 sind Durchgangsbohrungen und erstrecken sich in Dickenrichtung vollständig durch die Leiterplatte 120 hindurch. Ebenso ist es möglich, dass Bohrungen 132, 134, 136, 138 als Durchgangsbohrungen und andere Bohrungen 132, 134, 136, 138 als Sacklochbohrungen ausgebildet sind. Beispielsweise kann es bevorzugt sein, die mittige Bohrung 132 als Durchgangsbohrung auszubilden, wobei die anderen Bohrungen 134, 136, 138 als Sacklochbohrungen ausgebildet sind.

Die jeweiligen Bohrungsachsen 133, 135, 137, 139 der Bohrungen 132, 134, 136, 138 erstrecken sich im Wesentlichen parallel zueinander und sind derart symmetrisch zueinander angeordnet, dass die Bohrungsachsen 135, 137, 139 symmetrisch um die mittige Bohrungsachse 133 angeordnet sind. Insbesondere befinden sich die Bohrungsachsen 135, 137, 139 an den Ecken eines virtuellen gleichseitigen Dreiecks 131, das im Wesentlichen senkrecht zu den Bohrungsachsen 133, 135, 137, 139 erstreckt. In alternativen Ausgestaltungen befinden sich die Bohrungsachsen 135, 137, 139 an den Ecken jeglichen virtuellen Dreiecks 131, das nicht zwangsweise gleichseitig sein muss und somit die Bohrungsachsen 135, 137, 139 nicht zwangsweise symmetrisch um die mittige Bohrungsachse 133 angeordnet sein müssen.

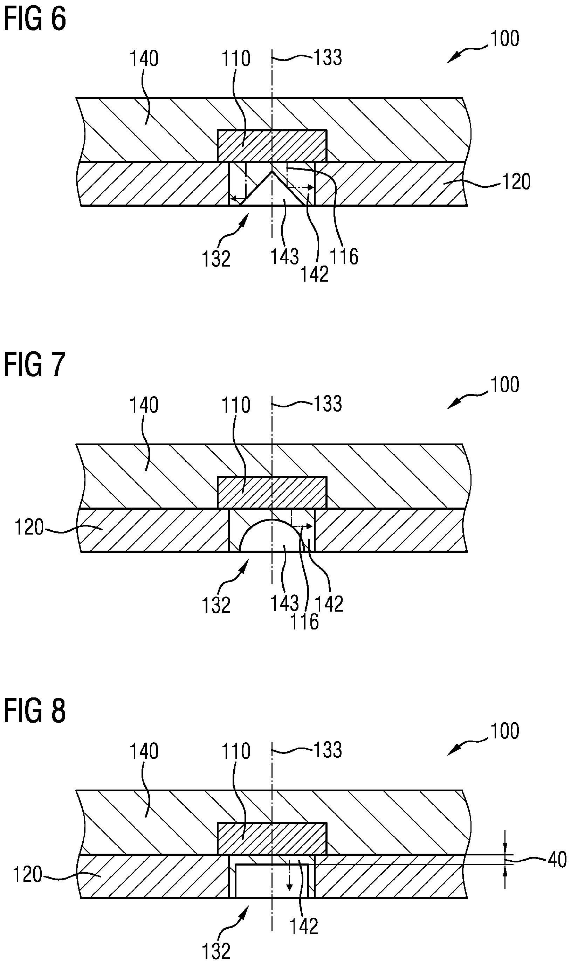

Die Leiterplatte 120 weist bei der Ausgestaltung der Fig. 2 insgesamt drei Befestigungsbereiche 122, 124, 126 auf, an denen ein in der Fig. 2 mit gepunkteter Linie schematisch dargestellte Ultraschallwandler 110 befestigt werden kann. Die Befestigungsbereiche 122, 124, 126 sind bevorzugt in unmittelbarer Nähe zu bzw. angrenzend an die Ausnehmung 130, vorzugsweise an der mittigen Bohrung 132, angeordnet. Der Ultraschallwandler 110 ist an der Leiterplatte 120 mittels der Befestigungsbereiche 122, 124, 126 derart angebracht, dass sich der Ultraschallwandler 110 zumindest teilweise über die Ausnehmung 130 erstreckt. Das heißt, dass der Ultraschallwandler 110 zumindest teilweise oberhalb der Ausnehmung 130 angebracht ist und die Ausnehmung 130 derart dimensioniert ist, dass in radialer Richtung außerhalb des Ultraschallwandlers 110 (in Draufsicht betrachtet) ein ausreichend großer Bereich der Ausnehmung vorhanden ist, in dem ein Gehäuse 140 (siehe Fig. 6 bis 8) derart vorgesehen werden kann, dass ein Gehäusebereich 142 (siehe ebenfalls Fig. 6 bis 8) zumindest teilweise in der Ausnehmung 130 angeordnet ist.

Die Ausnehmung 130 in der Leiterplatte 120 sollte derart ausgestaltet sein, dass der Ultraschallwandler 110 an der Leiterplatte 120 derart befestigt und mit dieser elektrisch verbunden werden kann, dass der Überlapp des Ultraschallwandlers 110 mit der Ausnehmung 120 deutlich größer ist als der Überlapp des Ultraschallwandlers 110 mit der Leiterplatte 120. Außerdem ist es bevorzugt, das Gehäuse den Ultraschallwandler nahezu vollständig umschließt und mit diesem nahezu vollflächig in Kontakt steht.

Die Fig. 3 zeigt eine weitere mögliche Ausführung für die Form der Ausnehmung 130. Gemäß der Fig. 3 ist die Ausnehmung 130 durch insgesamt fünf Bohrungen 132, 134, 136, 138, 144 gebildet, deren Bohrungsachsen 133, 135, 137, 139, 145 sich im Wesentlichen parallel zueinander erstrecken. Die Bohrungen 132, 134, 126, 138, 144 sind derart angeordnet, dass diese sich zumindest teilweise zu einer ununterbrochenen Ausnehmung 130 überlappen. Wie in der Fig. 3 gezeigt, sind die Bohrungsachsen 135, 137, 139, 145 derart symmetrisch um die Bohrachse 133 angeordnet, dass sich diese Bohrachsen 135, 137, 139, 145 an den Ecken eines virtuellen Quadrats 141 befinden. Analog zur Fig. 2 ist hier auch alternativ möglich, dass die Bohrungsachsen 135, 137, 139, 145 auf den Ecken eines Vierecks, vorzugsweise eines Rechtecks, angeordnet sind.

Der Ultraschallwandler 110 gemäß der Fig. 3 kann an der Leiterplatte 120 wiederum über insgesamt vier Befestigungsbereiche 122, 124, 126, 128 befestigt werden, die vorzugsweise in unmittelbarer Nähe zu bzw. angrenzend an die Ausnehmung, bevorzugt an die mittlere Bohrung 132, angeordnet sind. Auch hier ist der Ultraschallwandler 110 wieder an den Befestigungsbereichen 122, 124, 126, 128 an der Leiterplatte 120 derart angebracht, dass sich der Ultraschallwandler 110 zumindest teilweise über die Ausnehmung 130 erstreckt.

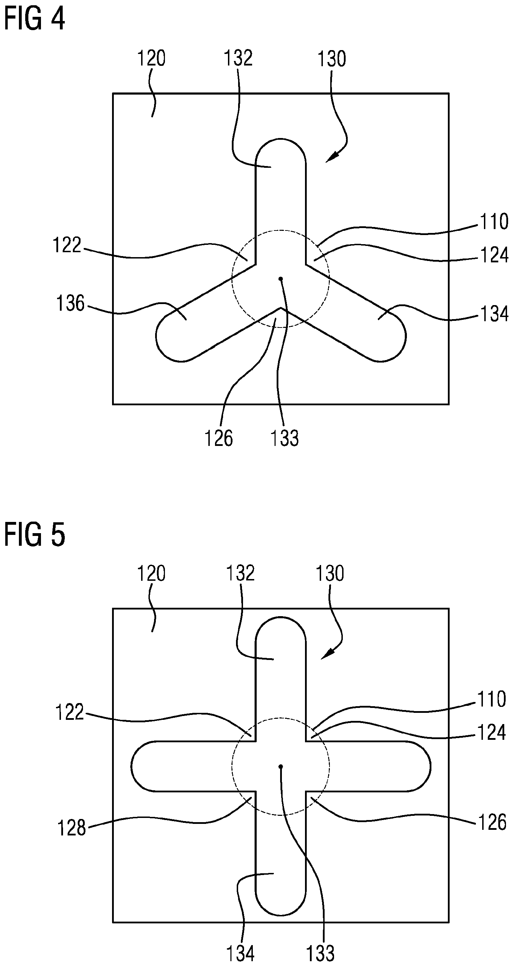

Die Fig. 4 und 5 zeigen zwei weitere mögliche Ausgestaltungen für die Ausnehmung 130. Die Ausnehmungen 130 der Fig. 4 und 5 unterscheiden sich von den Ausnehmungen 130 der Fig. 2 und 3 darin, dass es sich um gefräste Ausnehmungen handelt.

Bei der Ausnehmung 130 der Fig. 4 handelt es sich um drei geradlinige Fräsungen 132, 134, 136, die sich von einem gemeinsamen Punkt 133 aus unter einem Winkel von ungefähr 120° zueinander symmetrisch erstrecken. Der Ultraschallwandler 110 kann bei der Ausgestaltung gemäß Fig. 4 über drei Befestigungsbereiche 122, 124, 126 an der Leiterplatte 120 derart angebracht werden, dass sich der Ultraschallwandler 110 wiederum zumindest teilweise über die Ausnehmung 130, vorzugsweise über den Bereich oberhalb des gemeinsamen Punkts 133, erstreckt. Die Befestigungsbereiche 122, 124, 126 sind dabei in unmittelbarer Nähe zur bzw. angrenzend an die Ausnehmung 130, bevorzugt an den Bereich um den gemeinsamen Punkt 133, und symmetrisch zu diesem angeordnet.

Die Ausnehmung 130 der Fig. 5 ist eine kreuzförmige Ausnehmung. Insbesondere kann die Ausnehmung 130 der Fig. 5 aus zwei geradlinigen Fräsungen 132, 134 bestehen, die sich im Wesentlichen in einem Mittelpunkt 133 kreuzen.

Vorzugsweise stehen die beiden geradlinigen Fräsungen 132, 134 im Wesentlichen senkrecht zueinander. Der Ultraschallwandler 110 kann bei der Ausführung gemäß Fig. 5 mittels der vier Befestigungsbereiche 122, 124, 128, 126 mittig oberhalb des Bereich um den Mittelpunkts 133 derart angebracht werden, dass sich der Ultraschallwandler 110 wiederum zumindest teilweise über die Ausnehmung 130 erstreckt und oberhalb dieser angeordnet ist.

In weiteren vorteilhaften Ausgestaltungen kann die Ausnehmung 130 auch anders ausgebildet sein, beispielsweise aus einer Kombination von Bohrungen und Fräsungen bestehen. Zudem ist es auch erfindungsgemäß, wenn die Ausnehmung 130 in jeglicher Form bereitgestellt und mit jeglichem, aus dem Stand der Technik bekannten Fertigungsverfahren hergestellt ist.

Die Fig. 6 bis 8 zeigen jeweils Schnittansichten durch die Leiterplatte 120 der Fluidsensorvorrichtung 100 entlang der Linie A - A der Fig. 3 mit unterschiedlichen Ausgestaltungsmöglichkeiten für das Gehäuse 140 der Fluidsensorvorrichtung 100.

Aus der Fig. 6 geht hervor, dass das Gehäuse 140 den Ultraschallwandler 110 und zumindest teilweise die Leiterplatte 120 derart umgibt, dass ein Gehäusebereich 142 zumindest teilweise in der Ausnehmung 130, insbesondere in der Bohrung 132, angeordnet ist. Dies kann bevorzugt mittels eines Kunststoffspritz- oder Kunststoffpressverfahrens hergestellt werden, wobei, wie bereits erwähnt, die Ausnehmung 130 derart dimensioniert ist, dass der Kunststoff über den vom Ultraschallsensor 110 nicht bedeckten Bereich der Ausnehmung 130, beispielsweise über den vom Ultraschallsensor 110 nicht bedeckten Bereich der Bohrungen 134, 135, 138 (siehe Fig. 2), in die Ausnehmung 130 fließen kann, um diese zumindest teilweise auszufüllen.

In alternativen Ausgestaltungen kann die Leiterplatte 120 auch im Wesentlichen vollständig vom Gehäuse 140 umgeben sein, so dass sich auch auf der vom Ultraschallwandler 110 abgewandten Seite der Leiterplatte 120 ein im Wesentlichen geschlossener Abschnitt des Gehäuses 140 befindet.

Der in der Ausnehmung 130 angeordnete Gehäusebereich 142 weist ferner einen auf der dem Ultraschallwandler 110 abgewandten Seite angeordneten konkaven Abschnitt 143 auf, der dazu ausgebildet ist, die vom Ultraschallwandler 110 ausgesendeten Ultraschallsignale zumindest teilweise vom Ultraschallwandler 110 weg abzulenken. In der Fig. 6 ist das Ultraschallsignal, welches von dem konkaven Abschnitt 143 abgelenkt wird, mit einem abgeknickten Pfeil 116 gekennzeichnet. Der konkave Abschnitt 143 gemäß der Ausgestaltung der Fig. 6 ist in der Form eines Konus gebildet.

Die Ausgestaltung des konkaven Abschnitts 143 der Fig. 7 unterscheidet sich von der Ausgestaltung des konkaven Abschnitts 143 der Fig. 6 darin, dass ein teilkugelförmiger, vorzugsweise halbkugelförmiger, konkaver Abschnitt 143 im Gehäusebereich 142 vorgesehen ist, der dazu ausgebildet ist, die vom Ultraschallwandler 110 ausgesendeten Ultraschallsignale wiederum teilweise vom Ultraschallwandler 110 wegzulenken. Auch in der Fig. 7 ist ein solches abgelenktes Ultraschallsignal mit einem abgeknickten Pfeil 116 gekennzeichnet.

Die in den Fig. 6 bis 8 gezeigten konkaven Abschnitte 143 können zumindest teilweise verhindern, dass das vom Ultraschallwandler 110 nach unten ausgesendete Ultraschallsignal, das für die Messung der Fluidsensorvorrichtung 100 nicht benötigt wird, nicht mehr zurück zum Ultraschallwandler 110 reflektiert und dort als Störsignal erfasst wird. Damit kann außerdem eine Abklingzeit des Ultraschallwandlers 110 zumindest teilweise reduziert werden.

In der Ausgestaltung gemäß Fig. 8 ist der konkave Abschnitt 143 in Form eines zylinderförmigen Abschnitts gebildet, der derart geformt ist, dass der Gehäuseabschnitt 142 in dem Bereich unterhalb des Ultraschallwandlers 110 eine Dicke 40 aufweist, die derart bemessen ist, dass die vom Ultraschallwandler 110 ausgesendeten Ultraschallsignale entweder definiert zurück zum Ultraschallwandler 110 reflektiert werden oder durch diese hindurch in die Umgebung der Fluidsensorvorrichtung 100 abgegeben werden können. Beispielsweise kann eine nahezu vollständige Transmission durch den Gehäuseabschnitt 142 erreicht werden, wenn die Dicke 40 des Gehäuseabschnitts 142 unterhalb des Ultraschallwandlers 110 ungefähr einem ganzzahligen Vielfachen der halben Wellenlänge des vom Ultraschallwandler 110 ausgesendeten Ultraschallsignals entspricht. Im Gegensatz dazu kann eine nahezu vollständige Reflexion des vom Ultraschallwandler 110 ausgesendeten Ultraschallsignals an der Grenzfläche zwischen Gehäuseabschnitt 143 und Umgebung erhalten werden, wenn die Dicke 40 derart bemessen ist, dass diese einem ungerade ganzzahligen Vielfachen eines Viertels der Wellenlänge des vom Ultraschallwandler 110 ausgesendeten Ultraschallsignals entspricht.

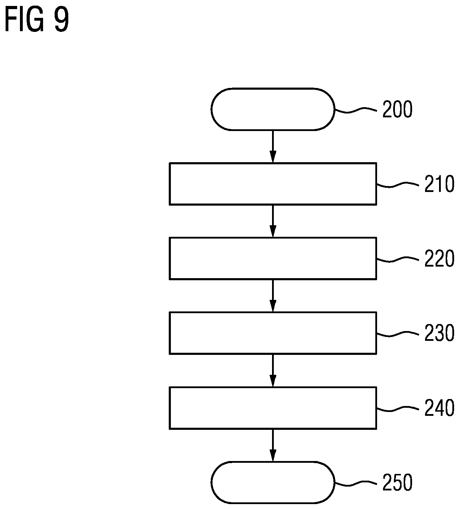

Die Fig. 9 zeigt ein beispielhaftes Ablaufdiagramm für ein Verfahren zum Herstellen einer erfindungsgemäßen Fluidsensorvorrichtung 100.

Das Verfahren der Fig. 9 startet beim Schritt 200 und gelangt dann zum Schritt 210, an dem eine Leiterplatte 120 bereitgestellt wird. In einem darauffolgenden Schritt 220 wird zumindest eine Ausnehmung 130 in der Leiterplatte erzeugt, die sich in Dickenrichtung der Leiterplatte 120 vollständig durch diese hindurch erstreckt. Im darauffolgenden Schritt 230 wird zumindest ein Ultraschallwandler 110 an der Leiterplatte 120 derart angebracht, dass sich der Ultraschallwandler 110 zumindest teilweise über die Ausnehmung 130 erstreckt. In einem weiteren Schritt 240 wird die Leiterplatte 120 samt Ultraschallwandler 110 mit Kunststoff zum Formen eines Gehäuses 140 derart umspritzt, dass dieses Gehäuse 140 zumindest teilweise in der Ausnehmung 130 angeordnet ist, insbesondere dass der Gehäuseabschnitt 142 in der Ausnehmung 130 angeordnet ist.

Dabei kann es bevorzugt sein, dass der Schritt 230 ein Positionieren des Ultraschallwandlers 110 an der Leiterplatte 120 in einer vorbestimmten Position, ein Fixieren des Ultraschallwandlers 210 an der vorbestimmten Position mittels einer Positionierungseinrichtung (nicht explizit gezeigt) und ein Befestigen und elektrisches Verbinden des Ultraschallwandlers 110 mit der Leiterplatte 120 an den Befestigungsbereichen 122, 124, 126 und 128 (siehe Fig. 2) umfasst. Die Positionierungseinrichtung kann zumindest teilweise verhindern, dass sich der Ultraschallwandler 110 während des Lötvorgangs aus seiner vorbestimmten Position verschiebt, wodurch die Positionierungsgenauigkeit des Ultraschallwandlers 110 auf der Leiterplatte 120 zumindest teilweise verbessert ist. Das Befestigen des Ultraschallwandlers 110 kann beispielsweise mittels löten oder kleben mit elektrisch leitfähigem Klebstoff erfolgen.

Die Positionierungseinrichtung kann bevorzugt vor dem Formen des Gehäuses 140 wieder entfernt werden. Alternativ verbleibt die Positionierungseinrichtung an der Fluidsensorvorrichtung 100 und wird ebenfalls vom Gehäuse 140 umgeben.

Die vorliegende Erfindung hat den Vorteil, dass eine definierte Anbindung des Ultraschallwandlers 110 an der Leiterplatte hergestellt wird, wobei die Gefahr von auftretenden Lunkern in einer sonst vorgesehenen vollflächigen Verlötung zumindest teilweise reduziert ist. Damit kann eine bessere Dämpfung des Abklingverhaltens des Ultraschallwandlers 110 und eine geringere Streuung der Eigenschaften bei verschiedenen, mehreren Fluidsensorvorrichtungen 100 erhalten werden.

## Patentansprüche

1. Fluidsensorvorrichtung (100) zum Erfassen eines Füllstands (10) und/oder einer Qualität eines in einem Fluidbehälter (14) befindlichen Fluids (12), wobei die Fluidsensorvorrichtung (100) aufweist:
- eine Leiterplatte (120), die zumindest eine Ausnehmung (130) aufweist, die sich in die Dickenrichtung der Leiterplatte (120) vollständig durch diese hindurch erstreckt, wobei die Leiterplatte (120) zumindest einen Befestigungsbereich (122, 124, 126, 128) aufweist,
- einen Ultraschallwandler (110), der an dem zumindest einen Befestigungsbereich (122, 124, 126, 128) der Leiterplatte (120) derart angebracht ist, dass sich der Ultraschallwandler (110) zumindest teilweise über die Ausnehmung (130) erstreckt, und
- ein Gehäuse (140), das zumindest teilweise die Leiterplatte (120) und den Ultraschallwandler (110) derart umgibt, dass ein Gehäusebereich (142) zumindest teilweise in der Ausnehmung (130) angeordnet ist, wobei der in der Ausnehmung (130) angeordnete Gehäusebereich (142) auf der dem Ultraschallwandler (110) abgewandten Seite einen konkaven Abschnitt (143) aufweist, der dazu ausgebildet ist,
- die vom Ultraschallwandler (110) ausgesendeten Ultraschallsignale zumindest teilweise vom Ultraschallwandler (110) weg abzulenken, oder
- definiert zum Ultraschallwandler (110) zurück zu reflektieren, oder
- in die Umgebung zu transmittieren.

2. Fluidsensorvorrichtung (100) nach Anspruch 1, wobei die Ausnehmung (130) aus zumindest einer Bohrung (132, 134, 136, 138, 144) gebildet ist.

3. Fluidsensorvorrichtung (100) nach Anspruch 2, wobei die Ausnehmung (130) aus vier Bohrungen (132, 134, 136, 138) mit parallelen Bohrungsachsen (133, 135, 137, 135) gebildet ist, wobei die Bohrungsachsen (133, 135, 137, 135) von drei der Bohrungen (134, 136, 138) relativ zur Bohrungsachse (133) der anderen Bohrung (132) derart angeordnet sind, dass diese an den Ecken eines Dreiecks (131) liegen, das in einer Ebene senkrecht zu den Bohrungsachsen (133, 135, 137, 139) liegt, und sich die Bohrungen (132, 134, 136, 138) zumindest teilweise überlappen.

4. Fluidsensorvorrichtung (100) nach Anspruch 3, wobei die vier Bohrungen (132, 134, 136, 138) jeweils einen gleichen Bohrungsdurchmesser haben und der Abstand der Bohrungsachsen (135, 137, 139) der drei Bohrungen (134, 136, 138) zur Bohrungsachse (133) der mittleren Bohrung (132) ungefähr dem 0,2-fachen bis 0,9-fachen des Bohrungsdurchmessers entspricht.

5. Fluidsensorvorrichtung (100) nach Anspruch 2, wobei die Ausnehmung (130) aus fünf Bohrungen (132, 134, 136, 138, 144) mit parallelen Bohrungsachsen (133, 135, 137, 139, 145) gebildet ist, wobei die Bohrungsachsen (135, 137, 139, 145) von vier der Bohrungen (134, 136, 138, 144) relativ zur Bohrungsachse (133) der anderen Bohrung (132) derart symmetrisch angeordnet sind, dass diese an den Ecken eines Vierecks (141) liegen, das in einer Ebene senkrecht zu den Bohrungsachsen (133, 135, 137, 139, 145) liegt, und sich die Bohrungen (132, 134, 136, 138, 144) zumindest teilweise überlappen.

6. Fluidsensorvorrichtung (100) nach Anspruch 5, wobei die fünf Bohrungen (132, 134, 136, 138, 144) jeweils einen gleichen Bohrungsdurchmesser haben und der Abstand der Bohrungsachsen (135, 137, 139, 145) der vier Bohrungen (134, 136, 138, 144) zur Bohrungsachse (133) der mittleren Bohrung (132) ungefähr dem 0,2-fachen bis 0,9-fachen des Bohrungsdurchmessers entspricht.

7. Fluidsensorvorrichtung (100) nach einem der vorhergehenden Ansprüche, wobei die Ausnehmung (130) zumindest teilweise durch Fräsen gebildet ist.

8. Fluidsensorvorrichtung (100) nach Anspruch 7, wobei die Ausnehmung (130) durch drei geradlinige Fräsungen (132, 134, 136) gebildet ist, die sich von einem gemeinsamen Punkt (133) aus unter einem Winkel von ungefähr 120° symmetrisch zueinander erstrecken.

9. Fluidsensorvorrichtung (100) nach Anspruch 7, wobei die Ausnehmung eine kreuzförmige Ausnehmung (130) ist.

10. Verfahren zum Herstellen einer Fluidsensorvorrichtung (100), die zum Erfassen eines Füllstands (10) und/oder einer Qualität eines in einem Fluidbehälter (14) befindlichen Fluids (12) ausgebildet ist, wobei das Verfahren aufweist:
- Bereitstellen einer Leiterplatte (120),
- Erzeugen von zumindest einer Ausnehmung (130) in der Leiterplatte (120), die sich in Dickenrichtung der Leiterplatte (120) vollständig durch diese hindurch erstreckt,
- Anbringen von zumindest einem Ultraschallwandler (110) an der Leiterplatte (120) derart, dass sich der Ultraschallwandler (110) zumindest teilweise über die Ausnehmung (130) erstreckt, und
- Umspritzen von zumindest teilweise der Leiterplatte (120) und des Ultraschallwandlers (110) mit Kunststoff zum Formen eines Gehäuses (140) derart, dass ein Gehäusebereich (142) zumindest teilweise in der Ausnehmung (130) angeordnet ist, wobei der in der Ausnehmung (130) angeordnete Gehäusebereich (142) auf der dem Ultraschallwandler (110) abgewandten Seite einen konkaven Abschnitt (143) aufweist, der dazu ausgebildet ist,
- die vom Ultraschallwandler (110) ausgesendeten Ultraschallsignale zumindest teilweise vom Ultraschallwandler (110) weg abzulenken, oder
- definiert zum Ultraschallwandler (110) zurück zu reflektieren, oder
- in die Umgebung zu transmittieren.

11. Verfahren nach Anspruch 10, wobei die Ausnehmung (130) aus zumindest einer Bohrung (132, 134, 136, 138, 144) und/oder zumindest einer Fräsung (132, 134, 136) erzeugt ist.

12. Verfahren nach einem der Ansprüche 10 und 11, wobei das Anbringen des zumindest einen Ultraschallwandlers (110) an der Leiterplatte (120) aufweist:
- Positionieren des Ultraschallwandlers (110) an der Leiterplatte (120) an einer vorbestimmten Position,
- Fixieren des Ultraschallwandlers (110) an der vorbestimmten Position mittels einer Positionierungseinrichtung, und
- Befestigen und elektrisches Verbinden des Ultraschallwandlers (110) mit der Leiterplatte (120).

## Claims

1. Fluid sensor apparatus (100) for capturing a filling level (10) and/or a quality of a fluid (12) in a fluid container (14), wherein the fluid sensor apparatus (100) has:
- a printed circuit board (120) having at least one recess (130) which extends completely through the printed circuit board (120) in the direction of its thickness, wherein the printed circuit board (120) has at least one fastening area (122, 124, 126, 128),
- an ultrasonic transducer (110) which is fitted to the at least one fastening area (122, 124, 126, 128) of the printed circuit board (120) in such a way that the ultrasonic transducer (110) extends at least partially over the recess (130), and
- a housing (140) which at least partially surrounds the printed circuit board (120) and the ultrasonic transducer (110) in such a way that a housing area (142) is at least partially arranged in the recess (130), wherein the housing area (142) arranged in the recess (130) has, on the side facing away from the ultrasonic transducer (110), a concave section (143) which is designed to
- at least partially deflect the ultrasonic signals emitted by the ultrasonic transducer (110) away from the ultrasonic transducer (110), or
- reflect them back to the ultrasonic transducer (110) in a defined manner, or
- transmit them into the environment.

2. Fluid sensor apparatus (100) according to Claim 1, wherein the recess (130) is formed from at least one bore (132, 134, 136, 138, 144).

3. Fluid sensor apparatus (100) according to Claim 2, wherein the recess (130) is formed from four bores (132, 134, 136, 138) with parallel bore axes (133, 135, 137, 135), wherein the bore axes (133, 135, 137, 135) of three of the bores (134, 136, 138) are arranged relative to the bore axis (133) of the other bore (132) in such a way that they are at the corners of a triangle (131) in a plane perpendicular to the bore axes (133, 135, 137, 139) and the bores (132, 134, 136, 138) at least partially overlap.

4. Fluid sensor apparatus (100) according to Claim 3, wherein the four bores (132, 134, 136, 138) each have the same bore diameter and the distance between the bore axes (135, 137, 139) of the three bores (134, 136, 138) and the bore axis (133) of the central bore (132) corresponds to approximately 0.2 to 0.9 times the bore diameter.

5. Fluid sensor apparatus (100) according to Claim 2, wherein the recess (130) is formed from five bores (132, 134, 136, 138, 144) with parallel bore axes (133, 135, 137, 139, 145), wherein the bore axes (135 , 137, 139, 145) of four of the bores (134, 136, 138, 144) are arranged symmetrically relative to the bore axis (133) of the other bore (132) in such a way that they are at the corners of a quadrilateral (141) in a plane perpendicular to the bore axes (133, 135, 137, 139, 145) and the bores (132, 134, 136, 138, 144) at least partially overlap.

6. Fluid sensor apparatus (100) according to Claim 5, wherein the five bores (132, 134, 136, 138, 144) each have the same bore diameter and the distance between the bore axes (135, 137, 139, 145) of the four bores (134, 136, 138, 144) and the bore axis (133) of the central bore (132) corresponds to approximately 0.2 to 0.9 times the bore diameter.

7. Fluid sensor apparatus (100) according to one of the preceding claims, wherein the recess (130) is at least partially formed by milling.

8. Fluid sensor apparatus (100) according to Claim 7, wherein the recess (130) is formed by three straight millings (132, 134, 136) extending symmetrically to each other from a common point (133) at an angle of approximately 120°.

9. Fluid sensor apparatus (100) according to Claim 7, wherein the recess is a cruciform recess (130).

10. Method for producing a fluid sensor apparatus (100) which is designed to capture a filling level (10) and/or a quality of a fluid (12) in a fluid container (14), wherein the method comprises:
- providing a printed circuit board (120),
- producing at least one recess (130) in the printed circuit board (120), which extends completely through the printed circuit board (120) in the direction of its thickness,
- fitting at least one ultrasonic transducer (110) to the printed circuit board (120) in such a way that the ultrasonic transducer (110) extends at least partially over the recess (130), and
- overmoulding at least parts of the printed circuit board (120) and of the ultrasonic transducer (110) with plastic to form a housing (140) in such a way that a housing area (142) is at least partially arranged in the recess (130), wherein the housing area (142) arranged in the recess (130) has, on the side facing away from the ultrasonic transducer (110), a concave section (143) which is designed to
- at least partially deflect the ultrasonic signals emitted by the ultrasonic transducer (110) away from the ultrasonic transducer (110), or
- reflect them back to the ultrasonic transducer (110) in a defined manner, or
- transmit them into the environment.

11. Method according to Claim 10, wherein the recess (130) is produced from at least one bore (132, 134, 136, 138, 144) and/or at least one milling (132, 134, 136).

12. Method according to either of Claims 10 and 11, wherein the process of fitting the at least one ultrasonic transducer (110) to the printed circuit board (120) comprises:
- positioning the ultrasonic transducer (110) on the printed circuit board (120) at a predetermined position,
- fixing the ultrasonic transducer (110) at the predetermined position by means of a positioning device, and
- fastening and electrically connecting the ultrasonic transducer (110) to the printed circuit board (120).

## Revendications

1. Dispositif de capteur de fluide (100) destiné à détecter un niveau de remplissage (10) et/ou une qualité d'un fluide (12) se trouvant dans un récipient de fluide (14), dans lequel le dispositif de capteur de fluide (100) comporte :
- une carte de circuit imprimé (120) présentant au moins un évidement (130) qui s'étend entièrement à travers la carte de circuit imprimé (120) dans le sens de l'épaisseur de celle-ci, dans lequel la carte de circuit imprimé (120) comporte au moins une région de fixation (122, 124, 126, 128),
- un transducteur à ultrasons (110) qui est monté sur la ou les régions de fixation (122, 124, 126, 128) de la carte de circuit imprimé (120) de telle sorte que le transducteur à ultrasons (110) s'étende au moins partiellement au-dessus de l'évidement (130), et
- un boîtier (140) qui entoure au moins partiellement la carte de circuit imprimé (120) et le transducteur à ultrasons (110) de telle sorte qu'une région de boîtier (142) soit au moins partiellement agencée dans l'évidement (130), dans lequel la région de boîtier (142) agencée dans l'évidement (130) comporte, sur le côté opposé au transducteur à ultrasons (110), une section concave (143) qui est conçue pour
- dévier au moins partiellement les signaux ultrasonores émis par le transducteur à ultrasons (110) en les éloignant du transducteur à ultrasons (110), ou
- les rétroréfléchir de manière définie vers le transducteur à ultrasons (110), ou
- les transmettre dans l'environnement.

2. Dispositif de capteur de fluide (100) selon la revendication 1, dans lequel l'évidement (130) est formé d'au moins un alésage (132, 134, 136, 138, 144).

3. Dispositif de capteur de fluide (100) selon la revendication 2, dans lequel l'évidement (130) est formé de quatre alésages (132, 134, 136, 138) présentant des axes d'alésage parallèles (133, 135, 137, 135), dans lequel les axes d'alésage (133, 135, 137, 135) de trois des alésages (134, 136, 138) sont agencés par rapport à l'axe d'alésage (133) de l'autre alésage (132) de telle sorte qu'ils se situent aux angles d'un triangle (131) qui se situe dans un plan perpendiculaire aux axes d'alésage (133, 135, 137, 139), et que les alésages (132, 134, 136, 138) se chevauchent au moins partiellement.

4. Dispositif de capteur de fluide (100) selon la revendication 3, dans lequel les quatre alésages (132, 134, 136, 138) présentent chacun un diamètre d'alésage identique et la distance entre les axes d'alésage (135, 137, 139) des trois alésages (134, 136, 138) et l'axe d'alésage (133) de l'alésage central (132) correspond à environ 0,2 fois à 0,9 fois le diamètre d'alésage.

5. Dispositif de capteur de fluide (100) selon la revendication 2, dans lequel l'évidement (130) est formé de cinq alésages (132, 134, 136, 138, 144) présentant des axes d'alésage (133, 135, 137, 139, 145) parallèles, dans lequel les axes d'alésage (135, 137, 139, 145) de quatre des alésages (134, 136, 138, 144) sont agencés symétriquement par rapport à l'axe d'alésage (133) de l'autre alésage (132) de telle sorte qu'ils se situent aux angles d'un quadrilatère (141) qui se situe dans un plan perpendiculaire aux axes d'alésage (133, 135, 137, 139, 145), et que les alésages (132, 134, 136, 138, 144) se chevauchent au moins partiellement.

6. Dispositif de capteur de fluide (100) selon la revendication 5, dans lequel les cinq alésages (132, 134, 136, 138, 144) présentent chacun un diamètre d'alésage identique et la distance entre les axes d'alésage (135, 137, 139, 145) des quatre alésages (134, 136, 138, 144) et l'axe d'alésage (133) de l'alésage central (132) correspond à environ 0,2 fois à 0,9 fois le diamètre d'alésage.

7. Dispositif de capteur de fluide (100) selon l'une des revendications précédentes, dans lequel l'évidement (130) est formé au moins partiellement par fraisage.

8. Dispositif de capteur de fluide (100) selon la revendication 7, dans lequel l'évidement (130) est formé par trois fraisages rectilignes (132, 134, 136) qui s'étendent symétriquement les uns par rapport aux autres à partir d'un point commun (133) selon un angle d'environ 120°.

9. Dispositif de capteur de fluide (100) selon la revendication 7, dans lequel l'évidement est un évidement cruciforme (130).

10. Procédé de fabrication d'un dispositif de capteur de fluide (100) qui est conçu pour détecter un niveau (10) et/ou une qualité d'un fluide (12) se trouvant dans un récipient de fluide (14), dans lequel le procédé comprend :
- la fourniture d'une carte de circuit imprimé (120),
- la création d'au moins un évidement (130) dans la carte de circuit imprimé (120), qui s'étend entièrement à travers celle-ci dans le sens de l'épaisseur de la carte de circuit imprimé (120),
- le montage d'au moins un transducteur à ultrasons (110) sur la carte de circuit imprimé (120) de telle sorte que le transducteur à ultrasons (110) s'étende au moins partiellement au-dessus de l'évidement (130), et
- l'enrobage par injection au moins partielle de la carte de circuit imprimé (120) et du transducteur à ultrasons (110) d'une matière plastique pour former un boîtier (140) de telle sorte qu'une région de boîtier (142) soit au moins partiellement agencée dans l'évidement (130), dans lequel la région de boîtier (142) agencée dans l'évidement (130) comporte, sur le côté opposé au transducteur à ultrasons (110), une section concave (143) qui est conçue pour
- dévier au moins partiellement les signaux ultrasonores émis par le transducteur à ultrasons (110) en les éloignant du transducteur à ultrasons (110), ou
- les rétroréfléchir de manière définie vers le transducteur à ultrasons (110), ou
- les transmettre dans l'environnement.

11. Procédé selon la revendication 10, dans lequel l'évidement (130) est créé à partir d'au moins un alésage (132, 134, 136, 138, 144) et/ou d'au moins un fraisage (132, 134, 136).

12. Procédé selon l'une des revendications 10 et 11, dans lequel le montage du ou des transducteurs à ultrasons (110) sur la carte de circuit imprimé (120) comprend :
- le positionnement du transducteur à ultrasons (110) sur la carte de circuit imprimé (120) à une position prédéterminée,
- la fixation du transducteur à ultrasons (110) à la position prédéterminée au moyen d'un appareil de positionnement, et
- la fixation et la connexion électrique du transducteur à ultrasons (110) à la carte de circuit imprimé (120).
